Europäisches Patentamt

(19) European Patent Office

Office européen des brevets

(11) Numéro de publication: **0 169 093**
**B1**

(12) **FASCICULE DE BREVET EUROPÉEN**

(51) Int. Cl.⁴: **H 04 N 5/455**, H 04 N 11/08

(45) Date de publication du fascicule du brevet:
**04.10.89**

(21) Numéro de dépôt: **85401090.7**

(22) Date de dépôt: **04.06.85**

(54) **Récepteur á démodulateur de fréquence pour système de télévision à multiplexage temporal.**

(30) Priorité: **04.06.84 FR 8408727**

(43) Date de publication de la demande:
**22.01.86 Bulletin 86/4**

(45) Mention de la délivrance du brevet:
**04.10.89 Bulletin 89/40**

(84) Etats contractants désignés:
**AT BE CH DE GB IT LI LU NL SE**

(56) Documents cité:
**EP-A-0 066 839**

**ICC '84, "LINKS FOR THE FUTURE", IEEE
International Conference on Communications, 14-
17 mai 1984, RAI Congress Centre, Amsterdam, NL,
vol. 1, pages 1-9, IEEE, Elseviers Science
Publishers; H. MERTENS et al.: "The EBU
C-MAC/packet system for direct broadcasting by
satellite"
Revue de l'U.E.R.-Technique, no.220, août
1983:"Système C-Mac Paquets pour la télévision
directe par satellite"**

(73) Titulaire: **ETAT FRANCAIS représenté par le
Secrétaire d'Etat aux Postes et
Télécommunications et à la Télédiffusion,
(CENTRE NATIONAL D'ETUDES DES
TELECOMMUNICATIONS) 38- 40 rue du Général
Leclerc, F-92131 Issy- les- Moulineaux (FR)**
Titulaire: **TELEDIFFUSION DE FRANCE, 10, rue
d'Oradour sur Glane, F-75932 Paris Cédex 15 (FR)**

(72) Inventeur: **Veillard, Jacques, La Viseule
Montgermont, F-35760 Saint Gregoire (FR)**

(74) Mandataire: **Fort, Jacques, CABINET
PLASSERAUD 84, rue d'Amsterdam, F-75009 Paris
(FR)**

## Description

L'invention a pour objet un récepteur à démodulateur de fréquence utilisable dans un système de télévision à multiplexage temporel de signaux d'image analogiques et de signaux de données numériques codés sous forme telle que l'encombrement spectral en fréquence de la partie analogique est supérieur à celui de la partie numérique. L'invention concerne plus particulièrement les récepteurs du type suivant le préambule de la revendication 1, utilisables dans le cas où le signal diffusé consiste en un multiplex temporel d'un signal d'image analogique et d'un signal de données numérique émis pendant les intervalles de suppression ligne et trame, ce signal de données étant codé suivant un code à réponse partielle de façon à en réduire l'encombrement spectral à une largeur inférieure à celle du spectre analogique.

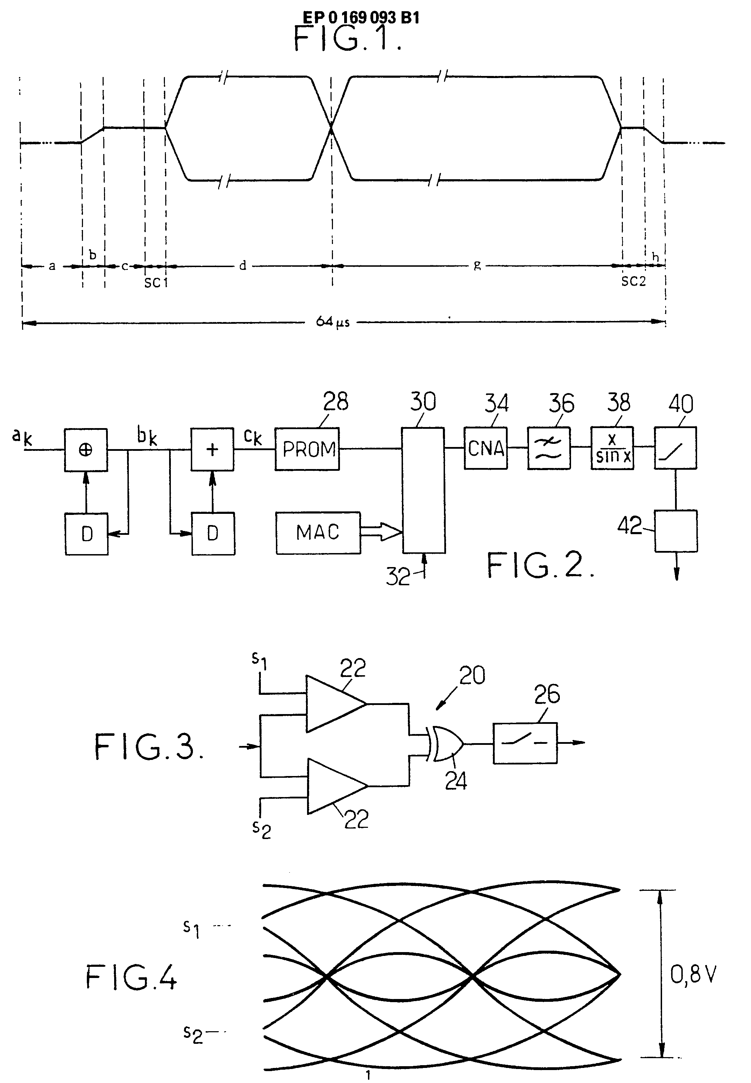

Il convient ici de rappeler que les études effectuées sous l'égide de l'U.E.R. ont conduit à définir un système de télévision directe par satellite dans la bande des 12 GHz, dit "MAC-PAQUETS" dont on pourra trouver une description dans l'article "Système C-MAC/PAQUETS pour la télévision directe par satellite" (Revue de l'U.E.R.-Technique n° 220, août 1983). Ce système utilise un signal à multiplexage temporel radiofréquence où la porteuse est modulée, d'une part, par des signaux analogiques d'image (luminance et chrominance) pendant une fraction de la durée de ligne, d'autre part, numériquement pendant une autre fraction de la durée de ligne par des données (voies son, synchronisation, données proprement dites éventuellement). Le signal peut notamment avoir la constitution montrée en figure 1, où les éléments numériques sont émis dans un multiplex par paquets. Sur la figure 1, les périodes successives sont affectées de la façon suivante:

a: période occupée par une salve de données codées en numérique, précédée d'un mot de synchronisation ligne,

b: transition à la fin des données, comportant le front avant du signal de décollement ajouté à la video pour fournir la dispersion d'énergie (ce signal pouvant être une onde triangulaire synchrone avec l'image),

c: période de clampage (donnant le niveau zéro de la différence de couleur et permettant d'aligner le signal à chaque ligne de balayage),

scl: réservée à l'embrouillage video,

d: différence de couleur (chrominance) sous forme d'échantillons analogiques émis avec compression temporelle dans un rapport 3/1,

g: luminance, sous forme d'échantillons analogiques avec compression temporelle dans un rapport 3/2,

sc2: réservée l'embrouillage video,

h: transition vers les données, comportant le front arrière du signal de décollement.

Le système C-MAC/PAQUETS envisagé l'heure actuelle pour la télévision directe par satellite dans le canal 12 GHz utilise la modulation de phase à quatre états MDP 2 - 4, à une fréquence d'horloge de 20,25 MHz, ce qui conduit à un encombrement spectral incompatible avec l'utilisation du même codage sur des réseaux terrestres. De plus, la modulation MDP 2 - 4 (qui utilise un codage numérique à réponse entière) impose le respect du premier critère de Nyquist, donc un point de passage à - 6dB à la demi-fréquence de symbole et a une forte sensibilité aux distorsions aux fréquences élevées. Enfin, l'absence de représentation en bande de base pose également des problèmes difficiles a résoudre de transmission sur les supports terrestres (réseaux câblés, voie hertzienne) utilisant un plan de fréquence à 7 ou 8 MHz.

On connaît déjà (EP-A-86 839) un démodulateur de fréquence pour un signal de télévision à large bande, de nature homogène et non pas constitué par un multiplex de signaux d'images analogiques et de salves de signaux de données numériques; ce démodulateur comprend un filtre d'entrée dont la largeur de bande est réglée ou réglable à une valeur qui est optimale pour le signal analogique lorsque ce dernier présente un rapport signal à bruit élevé: les critères de choix d'un tel filtre sont sans aucun lien avec la solution du problème posé par la coexistance de signaux analogiques et numériques ayant des largeurs de bande différentes.

L'invention vise notamment à écarter les défauts ci-dessus mentionnés du système C-MAC/PAQUETS. Pour cela, l'invention utilise notamment le fait que l'on peut, en substituant, à la modulation MDP 2 - 4, un codage en bande de base à réponse partielle qui est avantageusement un codage duo-binaire,

- avoir une représentation en bande de base identique pour tous les supports de transmission (satellite, voie hertzienne, réseaux câblés en coaxial ou en fibres optiques) dont l'encombrement spectral peut, si nécessaire, être limité à une valeur de 5 à 8,5 MHz,

- utiliser le même démodulateur de fréquence pour les signaux analogiques et numériques (image et données).

Cette dernière caractéristique garantit une mise en phase parfaite des signaux d'image et de données, puisque les retards appliqués sont automatiquement égaux. Il s'agit là d'un avantage essentiel puisque l'horloge et les signaux de synchronisation sont extraits des données.

L'invention propose notamment un récepteur du type ci-dessus défini, conforme à la revendication 1, ayant donc un démodulateur de fréquence commun pour les signaux analogiques et numériques au lieu de deux canaux de décodage complètement distincts.

Dans un mode avantageux de réalisation, le filtre est adaptatif et sa largeur de bande est commandée automatiquement pour varier entre une valeur proche de la valeur qui est optimale pour le signal analogique à rapport signal à bruit élevé et une valeur inférieure, qui reste au moins égale à la valeur optimale pour le signal numérique.

Le filtre peut comporter une partie à bande passante fixe et égale à la valeur optimale pour la partie analogique, suivie d'une partie ajustable comportant en parallèle une voie directe et une voie comportant un retard fixe et un atténuateur réglable, les deux voies attaquant un sommateur. Le réglage de la bande passante s'effectue alors par modification du taux d'atténuation. La modification peut être effectuée par des moyens qui mesurent la densité spectrale du bruit après démodulation dans une bande étroite de fréquence. Une autre solution consiste à mesurer le taux d'erreur sur les bits du signal numérique et à élaborer une tension croissant avec ce taux d'erreur pour commander l'atténuateur.

Une autre solution encore consiste à utiliser un filtre adaptatif à trois coefficients au moins.

Selon un autre aspect de l'invention, celle-ci propose un récepteur pour système de télévision à multiplexage temporel de signaux d'image analogiques et de salves de signaux de données numériques codés en duo-binaire, émis pendant les intervalles de suppresion ligne et trame, groupés en paquets, comprenant les signaux de son et de synchronisation, l'encombrement spectral de la partie analogique étant supérieur à celui de la partie numérique. Ce récepteur comporte un démodulateur de fréquence unique pour les signaux analogiques et numériques, adaptatif en fonction du rapport signal à bruit après démodulation ou fixe, mois avec une largeur inférieure à la largeur optimale pour la partie analogique à rapport signal à bruit élevé. Ainsi, on réduit considérablement la dégradation du signal d'image final en présence de bruits impulsifs de niveau élevé.

Suivant un autre aspect encore de l'invention, cette dernière propose un démodulateur de fréquence à ondes acoustiques de surface utilisable pour démoduler à la fois la partie analogique et la partie numérique, de bande spectrale plus étroite que la partie analogique, d'un signal modulé en fréquence avec multiplexage temporel numérique-analogique. Le démodulateur comprend, sur un même substrat, un filtre fixe possédant une largeur de bande correspondant à l'encombrement spectral du signal analogique et attaquant quatre voies en parallèle consituées chacune d'un transducteur d'entrée commun à toutes les voies et d'un transducteur de sortie. Deux des voies constituent une première paire pour laquelle les retards sont $\tau 0$ et $\tau 0 + \tau$ ($\tau 0$ étant une valeur fixe quelconque tandis que $\tau$ est une valeur correspondant à un filtrage à bande plus étroite que celle du filtre fixe) et attaquent un premier sommateur. Les deux autres voies constituent une seconde paire pour laquelle les retards sont $\tau 0 + \Theta$ et $\tau 0 + \tau + \Theta$ ($\Theta$ fixant la largeur de bande de discrimination de fréquence) et attaquent un second sommateur. Les deux sommateurs attaquent, par l'intermédiaire de limiteurs respectifs, les entrées d'un multiplieur dont la sortie est soumise à filtrage passe-bas. En interposant, sur les voies correspondant aux retards $\tau 0 + \tau$ et $\tau 0 + \tau + \Theta$, des atténuateurs présentent le même taux d'atténuation, commandés par le rapport signal à bruit en sortie du filtre passe-bas, on peut ajuster la largeur de bande.

L'algorithme de réglage de la largeur de bande pourra être choisi en fonction des besoins particuliers dans chaque cas. On peut par exemple choisir un algorithme de maintien du rapport signal à bruit à une valeur déterminée, à partir du moment où ce rapport tend à descendre au-dessous de cette valeur (10 dB par exemple) par rétrécissement de la bande jusqu'au rétrécissement maximal prévu. Une autre solution consiste à faire correspondre une valeur déterminée de la largeur de bande à chaque valeur du (rapport signal à bruit après démodulation, dès que ce rapport signal à bruit descend au-dessous d'une valeur déterminée.

Le démodulateur de fréquence doit être suivi d'un filtre passe-bas. On obtient des performances optimales, pour la démodulation du signal numérique, lorsque le filtre passe-bas est un filtre en arche de cosinus ayant (dans le cas du signal de télévision à modulation duobinaire mentionné plus haut) une largeur de bande à -3 dB égale a 5 MHz et une fonction de transfert du genre:

$$H(v) \quad = \cos(\pi v \, T/2) \qquad \text{pour } v < 1/T = 10 \text{ MHz}$$
$$= 0 \qquad\qquad\quad \text{pour } v > 1/T$$

Pour le signal analogique au contraire, on obtient une qualité optimale du signal d'image au-dessus du seuil avec un filtre passe-bas ayant une bande passante au moins égale à 7,5 MHz. Dans la pratique, cette double condition sera en général remplie en utilisant un filtre passe-bas ayant deux voies en parallèle, affectées l'une au signal numérique, l'autre au signal analogique d'image.

L'invention sera mieux comprise à la lecture de la description qui suit de modes particuliers de réalisation donnés à titre d'exemples non limitatifs. La description se réfère aux dessins qui l'accompagnent, dans lesquels:

- la Figure 1 montre la structure d'une ligne de télévision de 64 µs d'un signal dit "MAC/PAQUETS",
- la Figure 2 est un schéma très simplifié de la partie codage d'un émetteur de télévision destiné à fournir un signal du genre montré en Figure 1, avec codage duobinaire de la partie numérique,
- la Figure 3 est un schéma de décodeur duobinaire,
- la Figure 4 est le diagramme de l'oeil du signal fourni par l'émetteur de la Figure 2,
- la Figure 5 donne la variation du taux d'erreur sur la partie numérique codée en duo-binaire, en sortie d'un filtre, en fonction du rapport porteuse à bruit C/N,
- la Figure 6 est un synoptique simplifié de la partie décodage d'un récepteur à filtre adaptatif utilisable pour traiter un signal MAC/PAQUETS à codage duobinaire des données,
- la Figure 7 montre une constitution possible du filtre adaptatif de la Figure 6,

- la Figure 8 est un synoptique détaillant certains éléments de celui de la Figure 6,
- la Figure 8A, similaire à une fraction de la Figure 8, montre une variante de réalisation,
- la Figure 8B est un schéma de principe d'un filtre numérique adaptatif, constitué par un filtre transverse à trois coefficients, utilisable en remplacement du filtre analogique de la Figure 8,
- la Figure 8C est un schéma d'une variante constituant une simplification de la Figure 8B,
- la Figure 9 montre une réalisation analogique du circuit de commande de largeur de bande du filtre de la Figure 7,
- la Figure 10 montre les fonctions de transfert du filtre adaptatif du filtre de la Figure 7, pour divers réglages,
- la Figure 11 donne la variation du taux d'erreur sur les bits démodulés en fonction de C/N, pour le filtre de la Figure 10,
- la Figure 12 montre la variation du rapport signal à bruit S/B en fonction de C/N pour le même filtre,
- la Figure 13 montre une variante de réalisation à ondes acoustiques de surface, combinant filtre et discriminateur,
- la Figure 14 montre une constitution possible des transducteurs du filtre de la Figure 13, et
- la Figure 15 est un schéma d'adaptation à un récepteur de télévision terrestre.

L'invention sera décrite dans son application à un système de télévision utilisant un signal à multiplexage temporel à radio-fréquence où la porteuse est modulée en fréquence, d'une part, par des signaux analogiques d'image pendant une fraction de la durée de ligne, d'autre part, numériquement par un signal de données codé en duo-binaire. La répartition temporelle d'une durée de ligne peut être celle déjà donnée en Figure 1.

Mais la salve de données est alors codée en duo-binaire à 10,125 Mbits/s (au lieu de 20,25 Mbits/s dans le cas du C-MAC/PAQUETS).

L'élaboration du signal modulant peut s'effectuer suivant le schéma, de la Figure 2. Le signal de données (voie sonore codée numériquement et autres services, notamment informations de synchronisation) subit, après brassage à l'aide d'un générateur pseudoaléatoire, un précodage de la forme:

$$b_k = a_k \oplus b_k - 1$$

destiné à éviter la propagation des erreurs, puis le codage duo-binaire proprement dit:

$$c_k = b_k + b_k - 1$$

d'où:

$$c_k \,(\text{mod } 2) = a_k$$

Il faut noter au passage que le décodage du signal duo-binaire en bande de base (en sortie du démodulateur haute fréquence qui sera prévu dans le récepteur) est réalisé simplement à l'aide d'un circuit 20 qui peut être celui montré en Figure 3, comportant deux comparateurs 22 et une porte "OU EXCLUSIF" 24. Le signal binaire obtenu est ensuite soumis à échantillonnage en 26.

Le signal duobinaire obtenu peut prendre trois niveaux, qui peuvent être choisis comme correspondant:

- le niveau 0, au niveau 0 de chrominance,
- le niveau 1, aux niveaux de noir et blanc.

Le traitement correspondant est schématisé sur la Figure 2 par une mémoire morte 28.

Les signaux de données et d'image (ces derniers codés sur 8 bits par exemple) sont juxtaposés par un multiplexeur temporel 30 commandé par une entrée de commutation 32. Le signal multiplexé est ensuite soumis à:

- conversion analogique/numérique par un convertisseur 34,
- filtrage passe-bas d'élimination des composantes au-delà de la demi-fréquence d'échantillonnage, à l'aide d'un filtre rectangulaire 36 ayant une largeur de bande de 5 MHz,
- correction en x/sin x en 38, pour éviter les interférences entre symboles aux instants d'échantillonnage.

Le diagramme de l'oeil du signal obtenu est du genre montré en Figure 4. La modulation est choisie telle que, pour 1 V de crête à crête correspondant à une transition noir-blanc du signal de luminance, l'amplitude des données soit de 0,8 V aux instants de non-interférence entre symboles. Les seuils de décodage s1 et s2 (Figure 3) sont choisis approximativement au milieu de l'oeil.

Le signal obtenu est enfin soumis, en 40, à une pré-accentuation qui peut être celle normalisée par l'U.E.R., de la forme:

$$G(v) = [1 + (v/f_b)^2] \,/\, [1 + (v/f_a)^2]$$

avec

fa = 1,504 MHz,
fb = 0,842 MHz.

Le modulateur de fréquence 42 qui suit la cellule de préaccentuation 40 a une pente de modulation égale à 9,6 MHz/V. Dans ces conditions, la déviation de fréquence de la porteuse modulée a les valeurs suivantes:

- pour le signal d'image, 9,6 MHz pour les composantes de basse fréquence et 13,5 MHz pour la fréquence de transition de la cellule de préaccentuation (1,37 MHz);
- pour le signal de données, aux instants de non-interférence entre symboles, 7,6 MHz pour les composantes à basse fréquence du signal et 13,5 MHz pour les valeurs crête à crête du signal, ce qui correspond à un indice de modulation de 1,35.

A la réception, la porteuse modulée en fréquence doit être démodulée pour permettre de retrouver le signal numérique et le signal analogique, après passage à fréquence intermédiaire et filtrage de canal. Dans le cas du C-MAC/PAQUETS défini plus haut, le filtrage et la démodulation doivent être effectués par des voies séparées pour les deux signaux. Dans le cas, au contraire, où l'encombrement spectral des deux types de signaux est comparable, la démodulation peut s'effectuer à l'aide du même ensemble. Le calcul et l'expérience montrent que la qualité des services va dépendre de la largeur de bande de filtre de réception qui précède le démodulateur proprement dit. Cette qualité de service dépend également des caractéristiques du filtre passe-bas qui suit le démodulateur et qui doit avoir des caractéristiques différentes pour la partie numérique et pour la partie analogique du signal. Dans le cas où le codage utilisé est duo-binaire, et avec les valeurs numériques données ci-dessus:

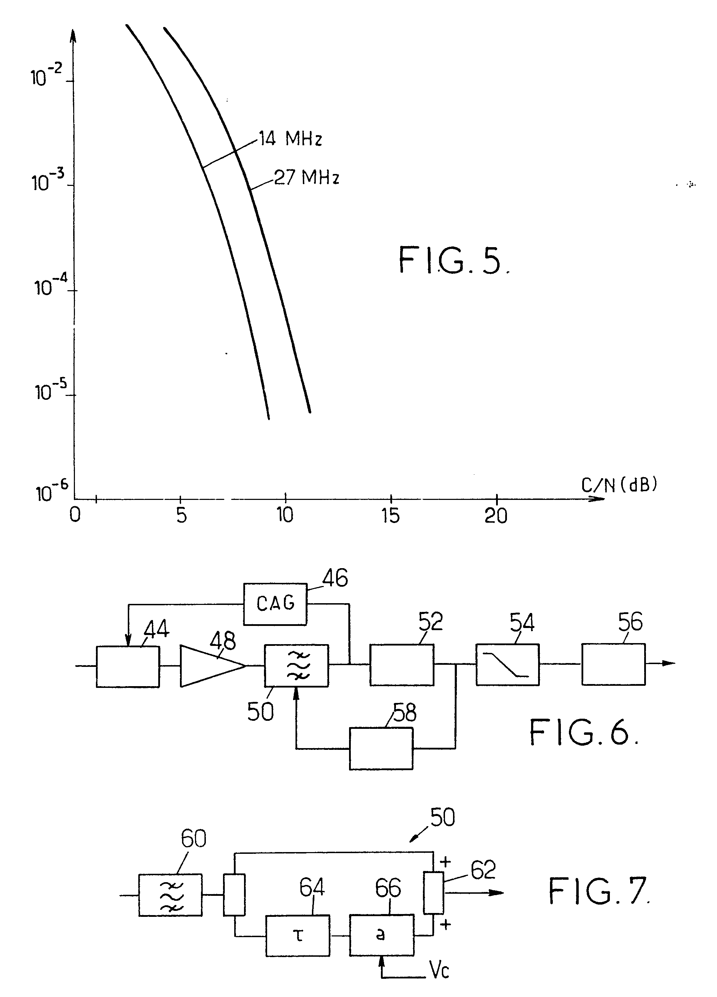

- les performances optimales du service numérique seront atteintes avec un filtre passe-bande ayant une largeur de bande à - 3 dB égale à 14 MHz. Ces caractéristiques peuvent être atteintes avec un filtre Butterworth à quatre pôles ou un filtre à onde de surface. La Figure 5 montre la variation du taux d'erreur en fonction du rapport porteuse à bruit C/N dans la bande de 27 MHz, pour deux filtres dont l'un a une largeur de 14 MHz et l'autre une largeur de 27 MHz; ces mêmes performances optimales sont obtenues avec un filtre passe-bas à basse fréquence ayant une largeur de bande à - 3 dB égale à 5 MHz, comme indiqué plus haut;
- pour le signal analogique MAC, les meilleurs résultats seraient en principe obtenus avec un filtre passe-bande de réception ayant une largeur à - 3 dB égale à 27 MHz. Mais, du fait que l'on utilise une modulation de fréquence, les résultats dépendent du bruit impulsif lorsque le rapport porteuse à bruit descend au-dessous du seuil (environ 10 dB). Ce bruit se manifeste par l'apparition de points noirs et blancs qui dégradent la qualité de l'image. Le nombre de ces points dépend des caractéristiques de la modulation et de la largeur de bande du filtre de réception. Le gain subjectif à l'égard du bruit impulsif est de l'ordre de 2 dB quand on passe d'un filtre de 27 MHz de large à un filtre de 14 MHz.

On voit donc que, en réduisant la largeur de bande du filtre commun au-dessous de la valeur optimale, de 27 MHz pour le signal analogique lorsque le rapport porteuse à bruit est élevé, sans toutefois descendre au-dessous de la demi-largeur, on réduit notablement la sensibilité au bruit impulsionnel sans dégrader le son, au prix d'une simple augmentation des distorsions.

Quant au filtre passe-bas qui suit le démodulateur de fréquence, il permet d'obtenir une qualité optimale du signal analogique d'image s'il a une bande passante d'au moins 7,5 MHz.

Deux solutions sont envisageables dans la réalisation d'un démodulateur de fréquence unique suivant l'invention pour obtenir des performances quasi optimales pour le signal numérique sans entraîner de dégradation inacceptable du signal analogique en présence de bruit impulsif dépassant le seuil.

En ce qui concerne le filtre de bande commun qui précède le démodulateur, la solution la plus sommaire consiste à utiliser un filtre ayant une largeur de bande inférieure à celle optimale pour la démodulation du signal analogique en l'absence de bruit impulsif, mais cependant supérieure ou égale à la valeur de bande optimale pour le son. Eventuellement, on peut utiliser un filtre dont la largeur de bande est commandée manuellement.

Une solution plus élaborée et plus satisfaisante consiste à utiliser un filtre adaptatif présentant une largeur de bande variable et un circuit permettant de réduire automatiquement la largeur de bande lorsque le rapport C/N descend au-dessous d'une valeur déterminée, 10 dB par exemple.

La constitution générale du récepteur, en aval des parties à radiofréquence, peut alors être celle montrée en Figure 6. L'élément d'entrée est constitué par un atténuateur électronique 44 associé à un circuit de commande automatique de gain 46, permettant d'avoir un niveau de porteuse constant à l'entrée du limiteur du démodulateur lorsque celui-ci est du type classique associant un limiteur et un discriminateur. Il est suivi d'un amplificateur 48 permettant d'amener le signal à un niveau convenable et du filtre adaptatif 50 qui attaque le démodulateur de fréquence 52. Ce dernier est suivi d'une cellule de désaccentuation 54 et des circuits de traitement des signaux d'image et de données 56, qui seront évoqués plus loin. Un circuit 58 commande la largeur du filtre 50 à partir du taux d'erreur constaté à la sortie du démodulateur de fréquence 52.

La largeur de bande à - 3 dB du filtre adaptatif 50 doit varier entre deux valeurs W1 et W2 (W2 étant inférieur à W1) lorsque le rapport porteuse à bruit C/N diminue. En reprenant l'exemple mentionné plus haut:

$W = W1 = 27$ MHz pour $C/N > \rho 1$,
$W = f(C/N)$ pour $\rho 2 < C/N < \rho 1$.

La fonction f doit décroître de façon monotone de W1 à W2 lorsque le rapport C/N décroît entre $\rho 1$ et $\rho 2$. Lorsque C/N devient inférieur à $\rho 2$, W garde la valeur constante W2.

Le filtre adaptatif 50 peut avoir la constitution montrée en Figure 7. Sur cette Figure, le filtre 50 comprend un filtre fixe 60, du type LC ou à ondes de surface, suivi d'une partie adaptative. Sur la Figure 7, le signal d'entrée est divisé en deux voies dans la partie adaptative. L'une des voies est appliquée directement à une des entrées d'un sommateur 62. Le signal passant par l'autre voie est retardé d'un temps $\tau$, par exemple dans une ligne à retard 64, puis traverse un atténuateur électronique 66 donnant une atténuation a comprise entre 0 et 1, commandée par la tension appliquée Vc. La sortie de l'atténuateur 66 est appliquée à l'autre entrée du sommateur 62. La fonction de transfert de la partie adaptative est alors donnée par l'expression:

$$F(v) = 1 + a.\exp(-j 2\pi v\tau)$$

Le module $\rho(v)$ de cette fonction a pour expression:

$$\rho(v) = |F(v)| = [(1 + a \cos 2\pi v\tau)^2 + (a \sin 2\pi v\tau)^2]^{1/2} \text{ avec } 0 \leqslant a \leqslant 1$$

On voit que $\rho(v) = 1$ pour $a = 0$ et que $\rho(v) = 2 \cos \pi v t$ pour $a = 1$: dans le cas où $\underline{a} = 1$, la largeur de bande entre deux zéros de $\rho(v)$ est définie par $\Delta v = 1/\tau$. La fréquence centrale f0 doit vérifier la relation $f0 = M/\tau$, N étant un entier.

Dans l'application considérée ici à titre d'exemple, on peut choisir les valeurs suivantes:

| | |
|---|---|
| f0 = | 115 MHz |
| $\Delta v$ = | 23 MHz |
| N = | 5 |
| $\tau$ = | 43,4 ns |

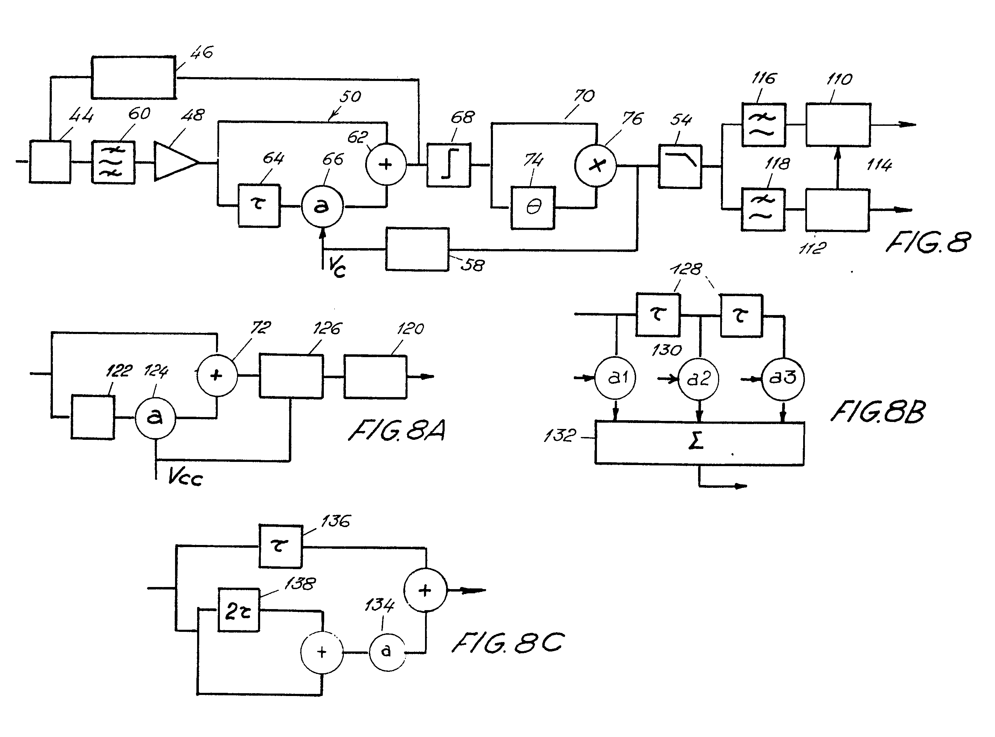

Le démodulateur de fréquence complet peut avoir la constitution donnée en Figure 8, sur laquelle on retrouve l'atténuateur électronique 44 associé à son circuit de commande 46, le filtre de bande fixe 60, l'amplificateur 48, la partie adaptative, un limiteur 68, un discriminateur de fréquence 70, la cellule de désaccentuation 54 dont la fonction de transfert est l'inverse de la cellule de pré-accentuation de l'émetteur, et un filtre passe-bas 72.

Le filtre passe-bas 72 présente deux voies, associées l'une au circuit 110 de traitement du signal d'image, l'autre au circuit 112 qui traite le signal numérique et fournit le signal de synchronisation sur une entrée 114 du circuit 110. Les filtres passe-bas 116 et 118 des deux voies présenteront une valeur proche des valeurs optimales mentionnées plus haut.

Une solution plus simple consiste à utiliser un filtre adaptatif à une seule voie, ayant la même constitution générale que le filtre adaptatif 50 haute fréquence de la Figure 8. Ce filtre sera alors constitué par le montage en série d'un filtre adaptatif à ligne à retard et d'un filtre classique 120 de type LC. La partie adaptative comporte alors la ligne à retard 122 et un atténuateur réglable 124 dont le taux d'atténuation est fixé par une tension de commande appliquée également à un amplificateur à gain variable 126 qui suit un sommateur recevant le signal direct et le signal retardé. L'amplificateur à gain variable 126 permet d'avoir une tension de sortie constante, quelle que soit l'atténuation introduite par l'atténuateur 124.

L'amplificateur 126 et l'atténuateur 124 sont conçus et commandés de façon que le gain 6 de l'amplificateur soit:

$G = G0$ pour $a = 0$
$G = G0/2$ pour $a = 1$,

$\underline{a}$ étant l'atténuation et G0 un gain déterminé.

Dans l'application à la télédiffusion par satellite, on peut notamment utiliser des filtres 120 et 72 ayant les caractéristiques suivantes:

Filtre fixe 120 ayant une fonction de transfert F(v):

$$F(v) = 1$$

pour $0 \leqslant v \leqslant 7,5$ MHz,

$$F(v) = \cos[\pi/2 (v - 7,5)] \text{ pour } 7,5 \leqslant v \leqslant 8,5 \text{ MHz},$$

$$F(v) = 0 \text{ pour } v > 8,5 \text{ MHz}$$

Partie adaptative:

Ligne à retard 122 fournissant un retard $\tau$ = 50 ns.

L'ensemble du filtre ainsi réalisé a une largeur de bande à - 3 dB qui varie entre 8 MHz pour a = 0 et 5 MHz pour a = 1.

La tension de commande Vcc fournie au filtre adaptatif 72 doit varier en fonction du rapport porteuse à bruit C/N. Cette tension peut être élaborée de façon similaire à la tension Vc de commande de l'atténuateur 66, qui sera décrite plus loin.

Dans le cas illustré sur la Figure 8, le discriminateur de fréquence 70 réalise le produit du signal d'entrée par le même signal retardé d'un temps $\Theta$. En pratique, le retard sera réalisé à l'aide d'une ligne à retard 74 qui peut être constituée par un simple tronçon de câble coaxial. La multiplication des signaux peut être réalisée par un modulateur en anneau 76.

Lorsque la fréquence varie, la tension de sortie du multiplieur 76 est une fonction périodique de $\nu$, formée d'arches de sinusoïde. Pour obtenir un discriminateur de fréquence centré sur f0; il faut que le retard $\Theta$ vérifie la relation:

$$\Theta = (2 P + 1) / 4 f0$$

où P est un entier positif. La distance entre deux sommets est alors égale à B = 1/2$\tau$.

Dans l'application à la radiodiffusion par satellite à 12 GHz, on peut choisir $\Theta$ = 15,2 ns (ce qui correspond à P = 3 pour une fréquence centrale de 115 MHz et une largeur de bande B = 32,8 MHz). Ce dispositif améliore notablement le rapport signal à bruit démodulé au voisinage du seuil.

Le démodulateur de la Figure 8 comporte encore le circuit de commande de bande passante 58, qui a pour rôle de fournir une tension de commande qui varie en fonction du rapport porteuse à bruit C/N, dans l'ensemble de la bande du filtre fixe 60. Ce circuit de commande peut être réalisé sous forme analogique ou numérique.

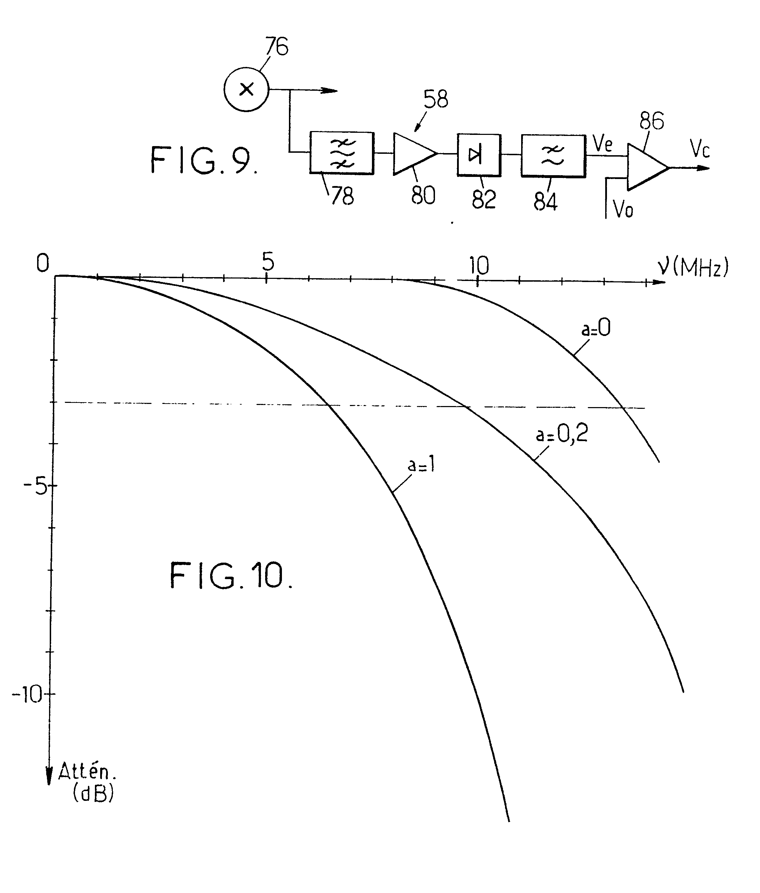

La Figure 9 représente une réalisation analogique du circuit 58. Le circuit 58 montré en Figure 9 comporte un filtre à bande étroite d'entrée 78 dont la fréquence centrale est supérieure à celle du signal utile, par exemple d'environ 9 MHz. Le signal de sortie du filtre 78 est amplifié en 80, et il attaque un détecteur d'amplitude 82 suivi d'un filtre passe-bas 84 qui fournit une tension Ve proportionnelle à la densité spectrale du bruit démodulé dans la bande étroite du filtre. La tension Ve est appliquée à l'une des entrées d'un amplificateur différentiel 86 dont l'autre entrée reçoit une tension de référence Vo. La caractéristique de l'amplificateur 86 permet de fixer la loi de variation de la bande passante du filtre adaptatif 50 en fonction du bruit. On peut par exemple utiliser un amplificateur 86 tel que:

Vc = 0 si Ve $\leqslant$ Vo

Vc = G Ve si Ve > Vo (G étant le gain de l'amplificateur 86)

Si la tension Vo a la valeur correspondant à une densité spectrale de bruit telle que C/N = 10 dB dans une bande passante de 27 MHz, on voit que ce dispositif ne fournira une tension de commande au filtre que si C/N est inférieur a 10 dB.

De nombreux modes de réalisation numériques sont possibles. Ils ne seront pas décrits, du fait qu'ils sont extrêmement simples à réaliser. Une solution immédiate consiste à mesurer le taux d'erreur sur les éléments binaires (ou bits) du signal numérique et à élaborer une tension proportionnelle à ce taux d'erreur, ou du moins une tension croissant en fonction du taux d'erreur.

La mesure peut par exemple être réalisée en utilisant le mot de synchronisation ligne de 7 bits qui précède chaque salve numérique dans un système du type MAC/PAQUETS. Pour cela, il suffit de faire, dans un registre à décalage, une comparaison bit à bit du signal reçu et du mot de synchronisation mis en mémoire dans le récepteur. Une autre solution consiste, puisque le codage duo-binaire implique des transitions interdites, à déterminer le taux d'erreur par la présence et la fréquence de telles transitions interdites.

La constitution en numérique peut me s'étendre au filtrage adaptatif dans son ensemble, en substituant un filtre numérique adaptatif à trois coefficients au montage de la Figure 7.

La Figure 8B montre un tel filtre, du type à réponse impulsionnelle finie ou transverse, ayant deux éléments 128 à retard $\tau$ et trois atténuateurs 130 imposant des taux d'atténuation a1, a2 et a3. On peut notamment adopter a1 = a3 = a et a2 = 1. Lorsque le coefficient a varie alors entre 0 et 0,5, le module $\rho$ de la fonction de transfert varie entre $\rho$ = 1 pour a = 0 et $\rho$ = 1 + cos 2 $\pi\nu$t pour a = 0,5. En choisissant une fréquence centrale $\nu$0 = N/$\tau$, on obtient autour de $\nu$0 une réponse amplitude-fréquence qui a la forme d'un cosinus surélevé, la largeur de bande entre deux zéros étant égale à $\Delta\nu$ = 1/$\tau$.

Ce type de filtre a l'intérêt de ne pas apporter de distorsion de phase lorsque le coefficient a a une valeur quelconque comprise entre 0 et 0,5.

Le mode de réalisation montré en Figure 8B n'est pas le seul possible. La Figure 8C montre une variante comportant un seul atténuateur 134 et deux lignes à retard 136 et 138, donnant respectivement des retards $\tau$ et

$2\tau$.

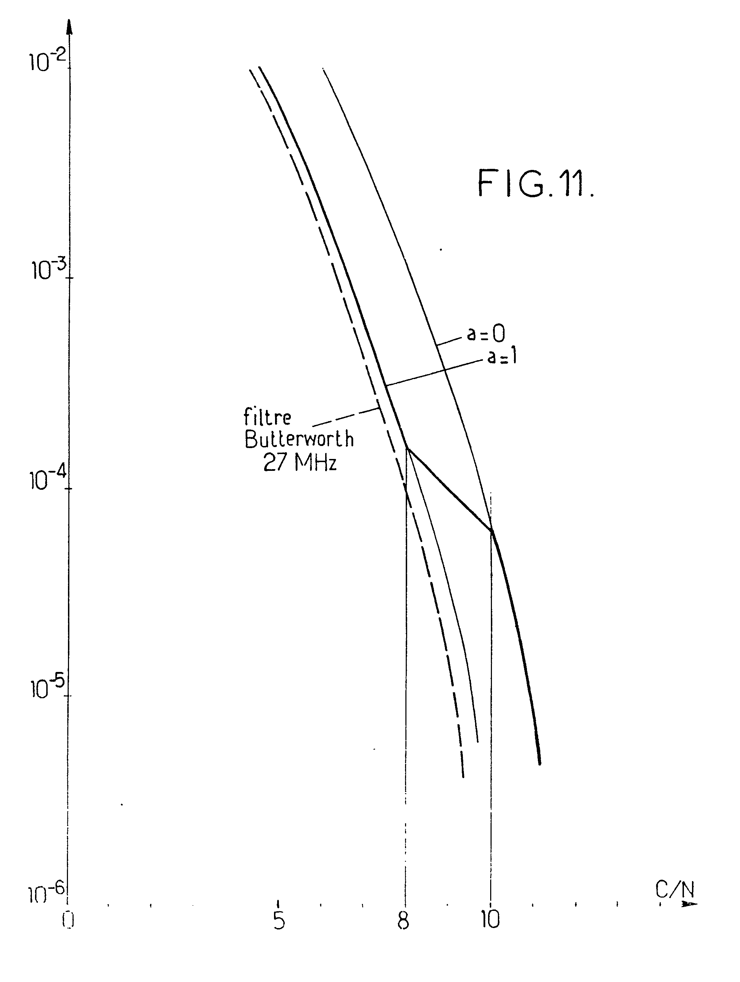

La Figure 10 donne la fonction de transfert du filtre adaptatif de la Figure 8, lorsque ce dernier comporte un filtre fixe 60 de type Butterworth à quatre pôles de largeur de bande à - 3 dB égale à 27 MHz et un filtre à ligne à retard avec $\frac{\Delta \nu}{2}$ = 14 MHz, pour différentes valeurs de a. La Figure 11 donne le taux d'erreur sur les éléments binaires démodulés du signal numérique obtenu avec le démodulateur de la Figure 8, lorsque le seuil de mise en service du filtre adaptatif a été fixé à C/N = 10 dB pour la bande complète de 27 MHz. On constate que, pour C/N < 10 dB, les performances obtenues sont très proches de celles correspondant au filtrage optimal (représenté par un filtre Butterworth à quatre pôles quasi rectangulaire avec une bande passante de 27 MHz), pour lequel le taux d'erreur est indiqué en tirets.

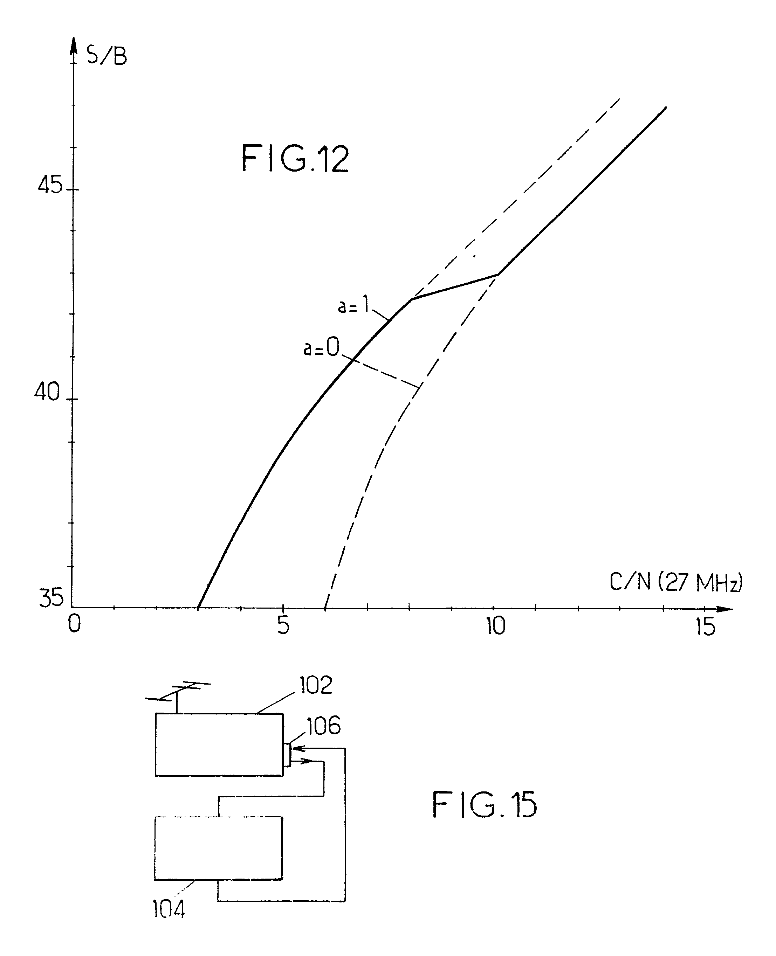

La loi de passage de a = 0 à a = montrée en Figure 11 n'est évidemment pas la seule possible. On pourrait par exemple chercher à maintenir un taux d'erreur constant à partir d'une valeur donnée, ce qui représente une solution commode à mettre en oeuvre dans le cas d'une mesure numérique du taux d'erreur. La ligne de transition entre les courbes correspondant à a = 0 et a = 1 serait alors horizontale. Il serait également possible de diminuer la largeur du filtre à partir d'une valeur de C/N différant de 10 dB. De façon générale, on pourra adapter la loi de transition jugée la plus appropriée entre une bande passante proche de l'optimum pour la partie analogique (lorsque le rapport porteuse à bruit est élevé) et la bande passante optimale pour la partie numérique. La Figure 12 montre, pour la même loi de transition que celle de la Figure 11, le rapport signal à bruit pondéré de luminance pour le signal d'image en fonction du rapport porteuse à bruit C/N dans la bande de 27 MHz. On voit que le gain subjectif obtenu en dessous du seuil est de l'ordre de 2 dB pour le rétrécissement maximum de la bande passante.

Dans le mode de réalisation de la démodulation de fréquence avec filtrage adaptatif qui a été illustré en Figure 8, les opérations de filtrage et de discrimination sont effectuées par des organes différents. Dans la variante de réalisation qui sera maintenant décrite, l'ensemble des opérations requises pour la démodulation de fréquence avec filtrage adaptatif sont réalisées par des moyens à ondes acoustiques de surface qui sont tous portés par un même substrat.

Il faut relever à ce sujet que l'on a déjà proposé (FR-A-2 312 881) un démodulateur différentiel destiné à démoduler des ondes modulées par déplacement de phase par des trains numériques, notamment lorsque le déplacement de phase est à deux états. L'invention va très au-delà de cette conception antérieure, puisqu'elle fournit un démodulateur de fréquence qui permet tout à la fois d'assurer la démodulation de la partie numérique et de la partie analogique d'un signal et permet en même temps un filtrage adaptatif garantissant une adaptation optimale de la bande passante au rapport porteuse à bruit.

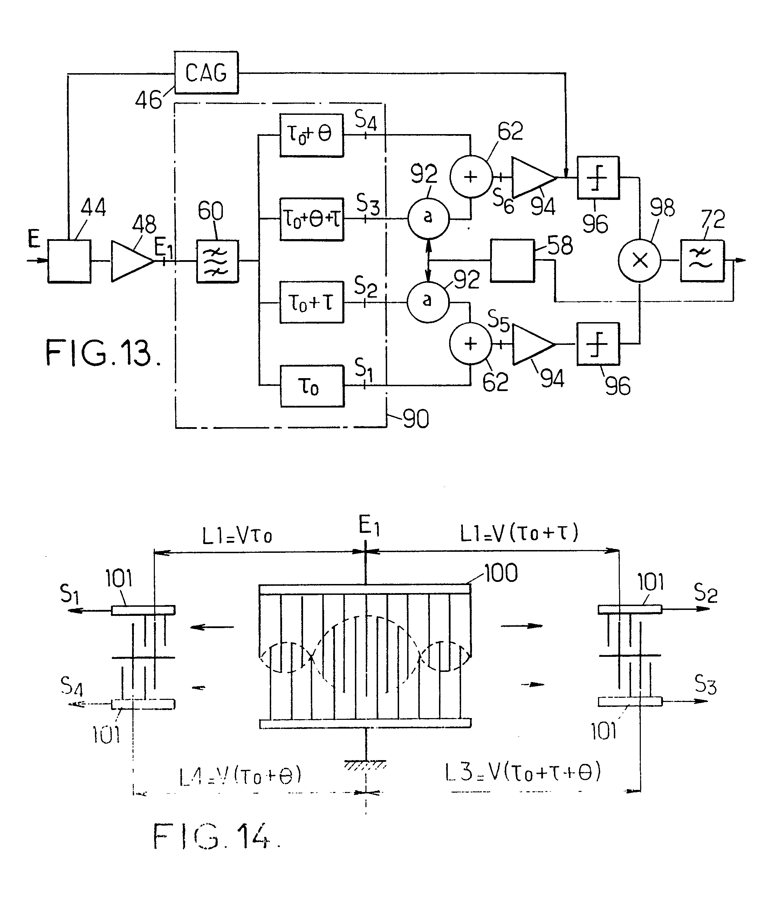

Le mode de réalisation de l'invention dont un schéma est montré en Figure 13 peut être réalisé suivant une technologie similaire à celle décrite dans le document FR-A-2 312 881 auquel on pourra se reporter, de sorte qu'il suffira de donner ici une description succincte. Sur la Figure 13, les organes correspondant à ceux déjà décrits portent encore le même numéro de référence.

L'entrée E du dispositif de la Figure 13 reçoit la porteuse modulée qui traverse un atténuateur 44 et un amplificateur 48 similaires aux organes correspondants de la Figure 8. La partie à ondes acoustiques de surface du dispositif (indiquée dans le cadre 90 en traits mixtes sur la Figure) comporte un filtre 60 de largeur de bande à - 3 dB fixe. Cette largeur W sera égale à 27 MHz dans l'exemple considéré plus haut. Le signal de sortie du filtre 60 est divisé entre quatre voies sur lesquelles sont interposés des retards différents, respectivement égaux à $\tau 0$, $\tau 0 + \tau$, $\tau 0 + \tau + \Theta$ et $\tau 0 + \Theta$. Les signaux de sortie de ces quatre voies sont désignés par S1, S2, S3 et S4. Chacun des signaux S2 et S3 est appliqué à un atténuateur électronique 92 de gain variable entre 0 et 1. Les signaux S2 et S3 atténués dans le même rapport sont respectivement ajoutés aux signaux S1 et 54 dans des additionneurs 62. Les signaux S5 et S6 obtenus en sortie des sommateurs 62 traversent des chaînes identiques comportant chacune un amplificateur 94 et un limiteur d'amplitude 96 les signaux obtenus en sortie des limiteurs 96 sont identiques, au retard près. On obtient le signal démodulé par produit des signaux sortant des limiteurs 96, dans un circuit 98, puis filtrage passe-bas en 72.

Le retard $\tau$ fixe (comme dans le cas envisagé plus haut) la largeur de bande à - 3 dB du filtre, qui va varier entre W pour a = 0 et $\frac{\Delta \nu}{2} = \frac{1}{2\tau}$ pour a = 1. Le retard $\Theta$ fixe de son côté la largeur de bande B entre sommets du discriminateur de fréquence. On a B = $1/2\Theta$.

Les retards $\tau$ et $\Theta$ doivent encore vérifier les conditions:

$\tau = N/f0$

$\Theta = (2P + 1)/4 f0,$

N et B étant des nombres entiers.

La commande de a peut être réalisée par un circuit 58 identique à celui montré en Figure 9.

La partie du dispositif de la Figure 13 mettant en oeuvre des ondes acoustiques de surface peut être réalisée sous la forme montrée schématiquement en Figure 14. Le dispositif comprend un transducteur d'entrée bidirectionnel 100 et quatre transducteurs de sortie 101 semblables. Les peignes interdigités des électrodes du transducteur d'entrée 100 ont des doigts de longueur variable de façon à obtenir la courbe de réponse en fréquence désirée. Les distances L1, L2, L3 et L4 entre le transducteur d'entrée 100 et les transducteurs 101 fournissant les sorties S1, S2, S3 et S4 sont telles que:

L1 = Vτo
L2 = V (τo + τ)
L3 = V (τo + τ + Θ)
L4 = V (τo + Θ)

V étant la vitesse des ondes de surface.

Dans le cas de la Figure 13 comme dans celui de la Figure 8, l'atténuateur 92 peut être constitué par un atténuateur électronique à diode PIN. Les diviseurs de puissance et sommateurs peuvent être de type classique: dans le cas des Figures 7 et 8 par exemple, on peut utiliser, comme diviseur de puissance et comme sommateur 62, le même circuit PSC 2 - 1 de MCL.

Parmi les avantages que permet d'obtenir le codage duo-binaire des données avec un débit de 10 125 Mbits/s, il faut noter la possibilité d'assurer la réception d'une émission hertzienne ainsi codée par simple adjonction d'un module supplémentaire à un poste de télévision classique. En effet, la faible sensibilité du codage duo-binaire des données à la réponse amplitude/fréquence aux fréquences élevées lui permet de s'accommoder d'une limitation de la bande passante. Celle-ci peut être réduite jusqu'à 4 MHz sans dégradation sensible du signal. Dans ces conditions, comme indiqué sur la Figure 15, il est possible de traiter le signal modulé dans les étages à radiofréquence (haute fréquence et fréquence intermédiaire) d'un poste de télévision classique 102. Le signal vidéo obtenu est recueilli sur la prise de péritélévision, puis décodé et démodulé dans un module 104 qui fournit les signaux de son, les signaux R, V, B de télévision dématricés et les signaux de synchronisation de ligne et de trame. Ces signaux sont réintroduits sur la prise de péritélévision 106, ce qui permet une adaptation des postes existants à la réception des émissions en MAC/PAQUETS à moindre coût.

## Revendications

1. Récepteur pour système de télévision à multiplexage temporel de signaux d'image analogiques et de salves de signaux de données numériques codés en duo-binaire, émis pendant les intervalles de suppression ligne et trame, groupés en paquets, comprenant des signaux de son et de synchronisation, l'encombrement spectral de la partie analogique étant supérieur à celui de la partie numérique, ledit récepteur comprenant deux voies distinctes (110, 112) affectées respectivement au signal d'image et au signal numérique, caractérisé en ce qu'il comporte, en amont des deux voies, un démodulateur de fréquence unique pour les signaux analogiques et numériques, ayant un filtre d'entrée (50) dont la largeur de bande est réglée ou réglable à une valeur intermédiaire entre celle qui est optimale pour le signal analogique lorsque ce dernier présente un rapport signal à bruit élevé et celle qui est optimale pour le signal numérique.

2. Récepteur selon la revendication 1, caractérisé en ce que le filtre d'entrée est à réglage manuel.

3. Récepteur selon la revendication 1, caractérisé en ce que le filtre (50) est adaptatif et en ce que des moyens sont prévus pour ajuster automatiquement sa largeur de bande en fonction du bruit ou du taux d'erreur qu'il provoque, entre une valeur proche de la valeur qui est optimale pour le signal analogique et une valeur inférieure optimale pour le signal numérique.

4. Récepteur selon la revendication 3, caractérisé en ce que le filtre comporte une partie à bande passante fixe et égale à la valeur optimale pour la partie analogique du signal, suivie d'une partie ajustable comportant en parallèle une voie directe et une voie comportant un retard fixe (64) et un atténuateur réglable (66), les deux voies attaquant un additionneur (62).

5. Récepteur selon la revendication 3 ou 4, caractérisé en ce que les moyens (58) pour ajuster automatiquement la largeur de bande mesurent la densité spectrale du bruit après démodulation dans une bande étroite de fréquence.

6. Récepteur selon la revendication 4, caractérisé en ce que les moyens pour ajuster automatiquement la largeur de bande mesurent le taux d'erreur sur les bits du signal numérique et élaborent une tension croissant avec le taux d'erreur pour commander l'atténuateur.

7. Récepteur selon la revendication 3, caractérisé en ce que le filtre adaptatif est un filtre numérique à trois coefficients.

8. Récepteur selon la revendication 3, caractérisé en ce que lesdits moyens sont prévus pour rétrécir la bande jusqu'à une valeur juste suffisante pour empêcher le rapport signal à bruit de descendre au-dessous d'une valeur prédéterminée.

9. Récepteur selon l'une quelconque des revendications précédentes, caractérisé en ce que la voie de traitement de signal d'image a un filtre passe-bas (116) et la voie de traitement de signal numérique, en parallèle avec la première, a un filtre passe-bas (118) de largeur différente.

10. Récepteur selon l'une quelconque des revendications 1 à 8, caractérisé en ce que le démodulateur alimente un filtre passe-bas adaptatif en fonction du rapport signal à bruit.

11. Récepteur selon la revendication 10, caractérisé en ce que le filtre passe-bas est prévu pour fournir un signal de niveau indépendant de la largeur de la bande.

12. Récepteur selon la revendication 1, caractérisé en ce que le filtre est à bande inférieure à la valeur optimale pour la démodulation du signal analogique.

13. Récepteur selon la revendication 1 ou 2, caractérisé en ce que le démodulateur comprend, sur un même substrat un filtre fixe (60) présentant une largeur de bande correspondant à l'encombrement spectral du signal analogique, dont la sortie attaque quatre voies en parallèle constituées chacune d'un transducteur d'entrée (100) commun à toutes les voies et d'un transducteur de sortie (101), deux des voies, qui constituent une première paire pour laquelle les retards sont $\tau0 + \tau$ et $\tau0$ (où $\tau0$ est une valeur fixe mais quelconque et $\tau$ une valeur correspondant à un filtrage à bande plus étroite que celle du filtre fixe), attaquant un premier sommateur (62) tandis que les deux autres voies, qui constituent une seconde paire pour laquelle les retards sont $\tau0 + \Theta + \tau$ et $\tau0 + \Theta$ (où $\Theta$ fixe la largeur de bande de discrimination de fréquence), attaquent un second sommateur (62), les deux sommateurs alimentant, par l'intermédiaire de limiteurs respectifs (96), les entrées d'un multiplieur (98) dont la sortie est soumise à filtrage passe-bas (72).

14. Récepteur selon la revendication 13, caractérisé en ce que les voies correspondant aux retards $\tau0 + \tau$ et $\tau0 + \Theta + \tau$ comportent chacun un atténuateur (92) et un circuit (58) de commande du taux d'atténuation en fonction du rapport signal à bruit après filtrage passe-bas (72).

## Patentansprüche

1. Empfänger für ein Fernsehsystem mit einem Zeitmultiplex aus analogen Bildsignalen und Signalbündeln aus duobinär kodierten digitalen Daten, wobei die Signalbündel der digitalen Daten während der Zeilen- und Bildaustastintervalle gesendet werden und in Paketen angeordnet sind, die Ton- und Synchronisiersignale enthalten, wobei die Spektralbreite des analogen Teils größer ist als diejenige des digitalen Teils, und wobei der Empfänger zwei getrennte Pfade (110, 112) umfaßt, die dem Bildsignal bzw. dem digitalen Signal zugeordnet sind,
dadurch gekennzeichnet,
daß vor den beiden Pfaden ein einziger Frequenzdemodulator für die analogen und digitalen Signale angeordnet ist, der ein Eingangsfilter (50) besitzt, dessen Bandbreite auf einen Zwischenwert geregelt oder regelbar ist, der zwischen dem Wert liegt, der für das analoge Signal optimal ist, wenn dieses ein erhöhtes Signal/Rauschverhältnis hat, und dem Wert, der für das digitale Signal optimal ist.

2. Empfänger nach Anspruch 1 dadurch gekennzeichnet, daß das Eingangsfilter manuell regelbar ist.

3. Empfänger nach Anspruch 1 dadurch gekennzeichnet, daß das Filter (50) ein adaptives Filter ist und daß Mittel vorgesehen sind, mit denen seine Bandbreite in Abhängigkeit von dem Rauschen oder der Fehlerrate, die es hervorruft, automatisch zwischen einem Wert, der in der Nähe des für das analoge Signal optimalen Werts liegt, und einem niedrigeren Wert, der für das digitale Signal optimal ist, einstellbar ist.

4. Empfänger nach Anspruch 3, dadurch gekennzeichnet, daß das Filter einen Teil mit einem festen Durchlaßbereich aufweist, der gleich dem optimalen Wert für den analogen Teil des Signals ist, und daß auf diesen Teil mit festem Durchlaßbereich ein regelbarer Teil folgt, ist, der einen direkten Pfad und einen zu diesem parallelen Pfad mit einer festen Verzögerungseinrichtung (64) und einer regelbaren Dämpfungseinrichtung (66) aufweist, und daß diese beiden Pfade einen Addierer (62) beaufschlagen.

5. Empfänger nach Anspruch 3 der 4, dadurch gekennzeichnet, daß die Mittel (58) zur automatischen Einstellung der Bandbreite die spektrale Dichte des Rauchens nach der Demodulation in einem engen Frequenzband messen.

6. Empfänger nach Anspruch 4, dadurch gekennzeichnet, daß die Mittel (58) zur automatischen Einstellung der Bandbreite die Fehlerrate der Bits des digitalen Signals messen und eine mit der Fehlerrate anwachsende Spannung zur Steuerung der Dämpfungseinrichtung liefern.

7. Empfänger nach Anspruch 3, dadurch gekennzeichnet, daß das adaptive Filter ein digitales Filter mit drei Koeffizienten ist.

8. Empfänger nach Anspruch 1, dadurch gekennzeichnet, daß die genannten Mittel dazu dienen, das Frequenzband bis auf einen Wert einzuengen, der gerade ausreicht, um zu verhindern, daß das Signal /Rauschverhältnis unter einen vorbestimmten Wert absinkt.

9. Empfänger nach einem der vorhergehenden Ansprüche, dadurch gekennzeichnet, daß der Pfad zur Verarbeitung des Bildsignals ein Tiefpaßfilter (116) enthält und daß der dazu parallele Pfad zur Verarbeitung des digitalen Signals ein Tiefpaßfilter (108) mit abweichender Bandbreite enthält.

10. Empfänger nach einem der Ansprüche 1 bis 8, dadurch gekennzeichnet, daß der Demodulator ein in Abhängigkeit von dem Signal/Rauschverhältnis adaptives Tiefpaßfilter speist.

11. Empfänger nach Anspruch 10, dadurch gekennzeichnet, daß das Tiefpaßfilter zur Lieferung eines Signals mit von der Bandbreite unabhängigem Pegel dient.

12. Empfänger nach Anspruch 1, dadurch gekennzeichnet, daß die Bandbreite des Filters kleiner ist als der für die Demodulation des analogen Signals optimale Wert.

13. Empfänger nach Anspruch 1 oder 2, dadurch gekennzeichnet, daß der Demodulator folgende Teile auf ein und demselben Substrat aufweist: eines festes Filter (60) mit einer der Spektralbreite des analogen Signals entsprechenden Bandbreite, dessen Ausgang vier parallele Pfade beaufschlagt, die jeweils aus einem allen Pfaden gemeinsamen Eingangswandler (10) und einem Ausgangswandler (101) bestehen, wobei zwei dieser

EP 0 169 093 B1

Pfade, die ein erstes Paar bilden, für das die Verzögerungen τ0 + τ und τ0 betragen, (worin τ0 ein fester aber beliebiger Wert ist und τ ein Wert, der einer Filterung kleinerer Bandbreite als der des festen Filters entspricht), einen ersten Summierer (62) beaufschlagen, während die beiden anderen Pfade, die ein zweites Paar bilden, für das die Verzögerungen τ0 + Θ + τ und τ0 + Θ betragen, (worin Θ die Bandbreite der Frequenzdiskriminierung festlegt), einen zweites Summierer (62) beaufschlagen, wobei die beiden Summierer über entsprechende Begrenzer (96) die Eingänge eines Multiplizierers (98) speisen, dessen Ausgangssignal einer Tiefpaßfilterfilterung (72) unterzogen wird.

14. Empfänger nach Anspruch 13, dadurch gekennzeichnet, daß die den Verzögerungen τ0 + τ und τ0 + Θ + τ entsprechenden Pfade jeweils eine Dämpfungseinrichtung (92) und eine Schaltung (58) zur Steuerung des Dämpfungsbetrags in Abhängigkeit von dem Signal/Rauschverhältnis nach der Tiefpaßfilterung (72) aufweisen.

## Claims

1. Receiver for television system with time multiplexing of analog image signals and bursts of duobinary coded digital data transmitted during the line and trame blanking intervals and grouped in packets, including sound and synchronization signals, the spectral space of the analog part being higher than that of the digital part, said receiver comprising two separate channels (110, 112) respectively dedicated to the image signal and to the digital signal,
characterized in that it comprises, upstream of the two channels, a single frequency demodulator for the analog and digital signals, having an input filter (50) whose band-width is adjusted or adjustable to a value intermediate between the value which is optimum for the analog signal when the latter has a high signal to noise ratio and a value which is optimum for the digital signal.

2. Receiver according to claim 1,
characterized in that the input filter is manually adjustable.

3. Receiver according to claim 1,
characterized in that the filter (50) is adaptive and in that means are provided for automatically adjusting its band-width, responsive to the noise or the error rate due to the noise, between value close to the value which is optimum for the analog signal and a lower value which is optimum for the digital signal.

4. Receiver according to claim 3,
characterized in that the filter comprises a part having a fixed pass-band part equal to the optimum value for the analog part of the signal, followed by an adjustable part comprising, in parallel, a direct channel and a channel comprising a fixed delay (64) and an adjustable attenuator (66) the two channels driving an adder (62).

5. Receiver according to claim 3 or 4,
characterized in that the means (58) for automatically adjusting the band-width measure the spectral density of the noise after demodulation in a narrow frequency band.

6. Receiver according to claim 4,
characterized in that the means for automatically adjusting the band-width measure the error rate on the bits of the digital signal and elaborate a voltage increasing with the error rate for controlling the attenuator.

7. Receiver according to claim 3,
characterized in that the adaptive filter is a three coefficient digital filter.

8. Receiver according to claim 3,
characterized in that said means are arranged for narrowing the band up to a value which is just sufficient for preventing the signal to noise ratio from decreasing beyond a predetermined value.

9. Receiver according to any one of the preceding claims,
characterized in that the image signal processing channel has a low pass filter (116) while the digital signal processing channel, in parallel relation with the first channel, has a low pass filter (118) of different width.

10. Receiver according to any one of claims 1 to 8,
characterized in that the demodulator feeds a low-pass filter which is adaptive responsive to the signal to noise ratio.

11. Receiver according to claim 10,
characterized in that the low-pass filter is arranged for delivering a signal having a level which is independent from the hand-width.

12. Receiver according to claim 1,
characterized in that the filter has a band less than the optimum value for demodulation of the analog signal.

13. Receiver according to claim 1 or 2,
characterized in that the demodulator comprises, on the same substrate: a fixed filter (60) having a band-width corresponding to the spectral space requirement of the analog signal, whose output drives four channels in parallel relation, each formed by an input transducer (100) common to all channels and an output transducer (101) two of the channels - which form a first pair for which the delays are and τ0 + τ and τ0 (where τ0 is a fixed but arbitrary value and is a value corresponding to filtering with a narrower band than that of the fixed filter) - driving a first summer (62) whereas the other two channels - which form a second pair for which the delays are τ0 + Θ + τ and τ0 + Θ (where Θ determines the frequency discrimination band-width) - drive a

11

second summer (62) the two summers supplying, through respective limiters (96), the inputs of a multiplier (98) whose output is subjected to low-pass filtering (72).

14. Receiver according to claim 13, <u>characterized in that</u> the channels corresponding to the delays $\tau 0 + \tau$ and $\tau 0 + \Theta + \tau$ each comprise an attenuator (92) and a circuit (58) controlling the attenuation rate responsive to the signal-to-noise ratio after low-pass filtering (72).

EP 0 169 093 B1

FIG.1.

FIG.2.

FIG.3.

FIG.4

FIG.5.

FIG.6.

FIG.7.

3

FIG.8

FIG.8A

FIG.8B

FIG.8C

FIG.9.

FIG.10.

FIG.11.

a=0

a=1

filtre
Butterworth
27 MHz

C/N

FIG.12

S/B

45

a = 1

a = 0

40

35

C/N (27 MHz)

0       5       10       15

102

106

FIG.15

104

FIG.13.

FIG.14.